(19) Europäisches Patentamt
European Patent Office
Office européen des brevets

(11) **EP 2 532 287 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(51) Int Cl.:
***A47J 27/14*** *(2006.01)* ***A47J 37/12*** *(2006.01)*

(21) Anmeldenummer: **12171037.0**

(22) Anmeldetag: **06.06.2012**

(54) **Verfahren zum Abfüllen von fließ- oder schüttfähigem Gut aus einem Garraum eines Gargeräts sowie Gargerät mit einem Garraum und einem Kippmechanismus zum Kippen des Garraums**

Method for emptying flowing or bulk goods from a cooking area of a cooking device and cooking device with a cooking area and a tilt mechanism for tilting the cooking area

Procédé de remplissage de marchandises pouvant s'écouler d'un espace de cuisson d'un appareil de cuisson ainsi qu'appareil de cuisson avec un espace de cuisson et un mécanisme de basculement destiné au basculement de l'espace de cuisson

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2011 DE 102011104698**

(43) Veröffentlichungstag der Anmeldung:
**12.12.2012 Patentblatt 2012/50**

(73) Patentinhaber: **MKN Maschinenfabrik Kurt Neubauer GmbH & Co. KG
38300 Wolfenbüttel (DE)**

(72) Erfinder:
• **Wollinger, Peter
82216 Gernlinden (DE)**

• **Boczaga, Jörg
38304 Wolfenbütttel (DE)**
• **Ruhe, Dirk
38667 Bad Harzburg (DE)**

(74) Vertreter: **Strobel, Wolfgang
Kroher-Strobel
Rechts- und Patentanwälte
Bavariaring 20
80336 München (DE)**

(56) Entgegenhaltungen:
**EP-A1- 2 301 392    EP-B1- 1 806 993
US-A- 5 617 000**

EP 2 532 287 B1

**Beschreibung**

Die Erfindung betrifft ein Verfahren zum Abfüllen von fließ- oder schüttfähigem Gut aus einem Garraum eines Gargeräts mit einem Motor und mit einem von dem Motor über einen Antrieb angetriebenen Kippmechanismus. Die Erfindung betrifft außerdem ein Gargerät mit einem mit fließ- oder schüttfähigem Gut füllbaren Garraum, mit einem Motor, mit einem von dem Motor über einen Antrieb angetriebenen Kippmechanismus zum Kippen des Garraums aus einer Arbeitsposition in mindestens eine weitere Position und zurück, mit einer Gerätesteuerung und mit einer Bedienungseinrichtung, die mit der Gerätesteuerung verbunden ist.

Gargeräte mit Garräumen, hier insbesondere in Form von Tiegeln, sind vielfach im Einsatz, insbesondere auch im Großküchenbereich. Diese Tiegel sind meist mit Nahrungsmitteln gefüllt, die üblicherweise eine flüssige Form etwa bei Suppen oder eine cremige oder ähnlich fließfähige Konsistenz annehmen, etwa bei Soßen und Gulasch und vergleichbaren Nahrungsmitteln.

Die Tiegel dieser Gargeräte sind Behälter, die durchaus eine erhebliche Menge derartiger fließfähiger Nahrungsmittel aufnehmen und ein hohes Gewicht besitzen können. Die darin zubereitete Menge soll häufig nach der Zubereitung auf verschiedene kleinere Behälter aufgeteilt werden, um dann zu verschiedenen Empfängern transportiert zu werden oder möglicherweise auch einem weiteren Verarbeitungsschritt zugeführt zu werden.

Es ist also erforderlich, die in dem Garraum beziehungsweise Tiegel zubereitete oder teilweise zubereitete flüssige oder sämige beziehungsweise cremige Substanz, also das Gut, insbesondere ein Gargut, aus dem Garraum in andere, kleinere transportable Behälter umzufüllen.

Hierzu ist der meist mit rechteckigem Umfang ausgebildete Tiegel kippfähig ausgestaltet. Er wird um eine Dreh- oder Kippachse gekippt, so dass sein Inhalt über eine der Kanten, insbesondere eine Längskante parallel zur Dreh- oder Kippachse, ausströmen kann, und zwar in einen der dort zuvor platzierten kleineren Behälter, dessen Abmessungen natürlich für diesen Ausgießvorgang passen müssen.

Dieser Kippvorgang ist in früherer Zeit per Hand erfolgt, beispielsweise wie in der DE 34 11 564 A1 vorgeschlagen mittels eines vom Benutzer drehbaren Handrades. Es gibt aber bereits seit längerem Vorschläge für eine mittels motorischem Antrieb unterstützte Kippbewegung, so schon etwa in der DE 93 09 709 U1.

Grundsätzlich kann man für die Ansteuerung solcher Kippbewegungen beispielsweise schon die Gedanken aus der EP 0 208 854 B1 heranziehen, in der eine Anordnung für die Steuerung eines solchen Kippvorganges gegeben wird, auch wenn dort noch nicht konkret an Tiegel für zubereitete Nahrungsmittel gedacht worden ist. Motorische Antriebe weisen aber auch schon Vorschläge nach der EP 1 806 993 B1 oder der EP 2 301 392 A1 auf.

Die EP 1 806 993 B1 schlägt vor, Sensoren an den Tiegeln anzuordnen und auf diese Weise die Drehposition des Behälters festzustellen. Die Sensoren können die Endpositionen des Tiegels, also seine ungekippte und seine maximal gekippte Position feststellen oder auch intermittierend oder kontinuierlich die absolute Drehposition erfassen.

Aus diesen Angaben der Sensoren über die aktuelle Position wird eine Steuereinrichtung oder Gerätesteuerung entsprechend informiert und ein Elektroantrieb mit entsprechenden daraus generierten Ansteuersignalen beaufschlagt, die dann die Neigung des Tiegels über den Elektroantrieb ändern.

Auch die EP 2 301 392 A1 arbeitet mit einer Vielzahl von Sensoren, welche den Füllstand des Tiegels, die Masse des Tiegelinhalts und weitere Daten abfühlen.

Derartige Konzepte sind recht aufwendig und kompliziert und durch den Einsatz der Sensoren auch relativ kostspielig. Die Vielzahl an Sensoren erhöht auch die Fehleranfälligkeit, da aus Fehlmessungen recht gravierende Fehlfunktionen hervorgehen können. Um die Fehlfunktionen zu vermeiden, müssten wiederum komplizierte Sicherungsmechanismen greifen.

Aufgabe der Erfindung ist es demgegenüber, eine einfachere Möglichkeit zu finden, um mit einem Verfahren bei einem Gargerät unter Zuhilfenahme eines motorischen Antriebes ein fließfähiges ganz oder teilweise zubereitetes Nahrungsmittel aus einen Garraum oder Tiegel in kleinere Behälter abzufüllen. Eine weitere Aufgabe besteht darin, ein entsprechendes Verfahren vorzuschlagen. Eine weitere Aufgabe besteht darin, ein entsprechendes Gargerät vorzuschlagen.

Die erste Aufgabe wird dadurch gelöst, dass zu Beginn der Garraum in eine Stellung gekippt wird, in der das fließ- oder schüttfähige Gut im Garraum bis zu einer zum Ausgießen vorgesehenen Überlaufkante steht, über diese jedoch noch nicht hinwegläuft, dabei wird die Stellung des Antriebs in diesem Moment festgestellt, aus dieser Stellung des Antriebs wird mittels einer vorab ermittelten Funktion das Volumen des Gutes im Garraum festgestellt, dieses festgestellte Volumen des Guts im Garraum wird auf der Grundlage von Eingaben in einer Bedienungseinrichtung sofort oder sukzessive in mehrere gleich und/oder verschieden große Teilvolumen für Portionen umgerechnet, für diese Teilvolumen werden Stellungen des Antriebs für sukzessive Ausgießvorgänge festgelegt, und der Motor treibt über den Antrieb den Kippmechanismus in mehreren Schritten so an, dass dieser die gleich großen und/oder unterschiedlich großen Portionen sukzessive über die Überlaufkante des Garraums ausgießt.

Die zweite Aufgabe wird bei einem gattungsgemäßen Gargerät mit der Erfindung dadurch gelöst, dass der Motor und/oder der Antrieb über ein Potentiometer verfügt, welches mit der Gerätesteuerung verbunden ist, und welches abhängig von einer Stellung des Antriebs einen Spannungswert an die Gerätesteuerung liefert, dass in der Gerätesteuerung eine Funktion hinterlegt ist, welche den Spannungswert des Potentiometers in Relation zu einem Volumen des fließ-oder schüttfähigen Guts im Garraum setzt, und dass die Gerätesteuerung so ausgebildet ist, dass abhängig von Eingaben in die Bedienungseinrichtung ein mittels des Potentiometers festgestelltes Volumen des Gutes im Garraum durch Ansteuern des Motors und Antreiben des Kippmechanismus über den Antrieb in gleich großen und/oder unterschiedlich großen Portionen sukzessive ausgießbar ist.

Eine derartige Lösung kommt praktisch ohne Sensoren aus und arbeitet mit einer direkten Steuerung. Sämtliche möglicherweise komplizierten Berechnungen oder Ermittlungen finden bereits vorab beim Hersteller des Gargerätes statt, so dass beim Benutzer lediglich ein für diesen leicht zu durchschauender Bewegungsablauf stattfindet, der nicht durch verschmutzte oder defekte Sensoren in irgendeiner Form beeinträchtigt werden kann.

Die erfindungsgemäße Ausgestaltung ermöglicht eine kostengünstige und praktisch keine kostspielige zusätzliche Hardware wie Sensoren oder andere Messgeräte im Vergleich zu herkömmlichen Gargeräten benötigende Konzeption eines Gargerätes mit einem kippbaren Garraum.

Besonders vorteilhaft wird dabei vorgesehen, dass der Motor die Kippbewegung mittels eines Linearantriebes bewirkt. Andere Antriebssysteme wie zum Beispiel ein Hubstangenmotor sind alternativ möglich. Ein Potentiometer gibt dabei an, welche Stellung der Linearantrieb dabei konkret hat.

Von besonderem Vorteil ist unter anderem auch, dass sich erfindungsgemäß ohne entsprechende Messungen von Sensoren und dergleichen für den Benutzer quasi als zusätzlicher Effekt eine Kenntnis des Volumens des Gargutes ergibt. Schließlich ist das Volumen des Gargutes und somit die Gargutmenge für den Nutzer interessant. Der Wert eines Kippwinkels oder etwa eines Potentiometers ist für den Nutzer üblicherweise ohne konkretes Interesse, da er diese Werte für den Zubereitungsvorgang und für die weitere Verwendung des Gargutes nicht benötigt, da es sich nur um Hilfswerte handelt.

Allein also durch einen Spannungswert des Potentiometers beziehungsweise durch den Ablauf des erfindungsgemäßen Verfahrens beim Portionieren des Gargutes ergibt sich aus den bereits in der Gerätesteuerung abgelegten und nun lediglich aufgerufenen Werten automatisch auch eine Angabe über das Volumen des zubereiteten Gargutes und über die Zahl und Einteilung der Portionen des Gargutes in kleinere Behälter, je nach den Vorgaben.

Es wird sogar möglich, sich die Frage "Wieviel Suppe ist noch im Garraum?" durch ein einfaches Kippen des Garraums anzeigen zu lassen. Die Gerätesteuerung ermittelt aus dem Spannungswert des Potentiometers beziehungsweise aus der Stellung des Antriebes, die eindeutig auch die Stellung des Garraumes zu dem Zeitpunkt angibt, an dem erstmals das Gargut bis zur Überlaufkante steht, auch schon den kompletten Inhalt zu diesem Zeitpunkt.

Irgendwelche Berechnungen von Kippwinkeln oder anderen Daten sind beim und durch den Benutzer des Gargerätes nicht erforderlich. Es wird unmittelbar aus der Stellung des Antriebes und den vom Benutzer gewünschten Angaben eine Steuerung generiert, die die weitere Tätigkeit des Motors und damit zugleich die weitere Bewegung des Garraums beziehungsweise Tiegels steuert.

In der Praxis erfolgt dies dadurch, dass der Antrieb, insbesondere also ein Motor, der für das Verfahren der Tiegel in dem Gargerät verantwortlich ist, mit einem Potentiometer ausgestattet wird. Bevorzugt ist das Potentiometer im Motor integriert. Dieses Potentiometer liefert in Abhängigkeit von der aktuellen Motorstellung einen Spannungswert.

Anhand der zurückgegebenen Spannung kann nun eine vorgesehene Gerätesteuerung die Stellung des Antriebs, also etwa die Stellung des Linearbetriebs und damit auch den gesamten Kipp-Zustand des Garraums beziehungsweise Tiegels einfach ermitteln, ohne dass Messwerte aufgenommen werden müssen.

Ist dieser Zustand bekannt, so können verschiedenste Vorgehensweisen erfolgen, die der Benutzer nach seinen Wünschen ohne das Feststellen weiterer Messergebnisse anfordern kann.

Bereits bei der Herstellung des Gargerätes und damit vor der ersten Inbetriebnahme wird bei jedem Gerät die Stellung des Antriebes an den Endpunkten aufgenommen, also beispielsweise bei einer waagerechten Arbeitsposition ein Startwert von 12 Volt und bei einem maximalen Kippzustand ein Wert von 0 Volt. Auch die Funktion der Zwischenwerte kann bereits im Werk oder bei der Konzeption festgelegt werden. Die Abhängigkeit ist quasi linear oder zumindest monoton steigend oder fallend, denn der Wert des allein interessierenden Volumens des flüssigen, cremigen oder sämigen Behälterinhalts in Bezug auf die Stellung des Antriebs und damit des Potentiometers ist eindeutig. Das bedeutet, dass bei einer Änderung des Wertes des Potentiometers sich auch der Wert des im Garraum oder Tiegel bis zur als Überlauf genutzten Kante befindlichen Volumens des fließfähigen Nahrungsmittels, also Behälterinhaltes, direkt ermitteln lässt. Der Wert lässt sich darüber hinaus in jeder Position durch relativ einfache geometrische Berechnungen bestimmen.

Fährt der Motor beziehungsweise Kippmechanismus in einer Richtung weiter, die den Garraum oder Tiegel noch schräger stellt, so ist der Garraum nicht mehr in der Lage, das zuvor noch passende Volumen des fließ oder schüttfähigen Gutes, insbesondere also eines Gargutes beziehungsweise Nahrungsmittels zu halten. Es nimmt also der Wert dieses Volumens ab und es ist somit eindeutig, dass die Differenz an Volumen über die als Überlaufkante benutzte Längskante des Tiegels abgeflossen ist, und zwar in den zuvor darunter plazierten oder gestellten Behälter.

Es ergibt sich somit eine direkte unmittelbare und eindeutige Bestimmung des abgegebenen und somit portionierten Differenzvolumens aus den beiden Werten des Potentiometers betreffend die Stellung des Motors. Weitere Messwerte oder sonstige Angaben sind nicht erforderlich, wenn ein flüssiges oder fließfähiges Nahrungsmittel im Garraum vorliegt.

Aufgrund der Eindeutigkeit dieser Funktion lassen sich beliebige Möglichkeiten nutzen, um das nach der Zubereitung im Garraum beziehungsweise Tiegel befindliche Gut- beziehungsweise Gargut-, also Nahrungsmittelvolumen zu portionieren. Als Gut kommen neben Gargut, also zubereiteten Nahrungsmitteln, auch Medien wie etwa Frittierfett oder Wasser oder nach einem Reinigungsvorgang auch verschmutztes Wasser in Betracht. Neben fließfähigen Gargütern wie etwa Suppen oder Soßen können mit dem erfindungsgemäßen Gargerät auch schüttfähige Gargüter wie beispielsweise zubereitete Erbsen portioniert werden, die zwar kein fließfähiges Gut darstellen, gleichwohl aber bei einer Schrägstellung des Garraumes entsprechend portioniert über die Überlaufkante in kleinere Behälter abgefüllt werden können. Auch das Abfüllen anderer fließ- oder schüttfähiger Güter ist denkbar. Im Folgenden wird von Gargut gesprochen werden, da dieses der überwiegende Einsatzzweck sein dürfte; die Ausführungen beziehen sich dann jedoch auch auf die anderen erwähnten fließ- oder schüttfähigen Güter.

Dabei wird zunächst das aktuell nach der Zubereitung im Garraum beziehungsweise Tiegel befindliche Volumen des Gutes oder Garguts bestimmt. Hierzu wird der Garraum beziehungsweise Tiegel mittels des Motors und des Antriebs zunächst so weit gekippt, dass die Oberfläche des fließ- oder schüttfähigen Guts mit der zum Überströmen vorgesehenen Kante des Garraums fluchtet, also das Gut gerade noch nicht überläuft.

Aus der Stellung des Antriebs und mithin des Potentiometers des Motors in diesem Moment ergibt sich als eindeutige Funktion das Gesamtvolumen des Garguts unterhalb dieser Oberfläche im Garraum. Dies gilt auch bei komplizierter geformten Garräumen, wobei diese Funktion wie erwähnt schon herstellerseitig in der Gerätesteuerung abgelegt ist.

Alternativ oder ergänzend kann auch eine Wiegemessung herangezogen und gegebenenfalls durch eine Eingabe der Konsistenz des Garguts modifiziert werden. Eine Wägeeinrichtung ist vielfach auch zu anderen Zwecken bei Gargeräten vorgesehen und könnte somit hier zusätzlich genutzt werden. Erforderlich ist sie jedoch nicht.

Der durch das Potentiometer des Motors jetzt festgestellte aktuelle Wert der Stellung des Antriebs und somit auch des Tiegels ist zugleich eine Startposition für die erste abzugebende Portion des Garguts. Dies gestaltet sich wie folgt:

So besteht häufig der Wunsch, das Volumen gleichmäßig auf eine bestimmte Anzahl von Behältern aufzuteilen. Diesen Wunsch kann der Benutzer entsprechend über eine Eingabe auswählen, eingeben oder sonst der Gerätesteuerung mitteilen. Beispielsweise kann der Benutzer vorab den Wunsch äußern, die Gesamtmenge des in dem Tiegel vorhandenen Gutes in zehn gleich große Portionen aufzuteilen und entsprechend in die anschließend bereit gestellten Behälter zu geben.

Diesen Wunsch setzt die Gerätesteuerung um, indem sie aus dem ermittelten Volumen des zur Verfügung stehenden Garguts zehn Portionen errechnet und für jede Portion eine bestimmte Stellung des Motors bestimmt, die dieser dann nach der Abgabe der zugehörigen Portion einnehmen soll. Die Differenz zwischen zwei aufeinanderfolgenden so bestimmten Positionen ist dann stets ein Äquivalent zu einer der ermittelten Portionen des Garguts.

Es ist in bestimmten Ausführungsformen auch möglich, komplizierte Aufteilungen zu wählen, etwa sechs kleinere und vier größere, beispielsweise doppelt so große Portionen des Nahrungsmittels, wenn dies etwa für eine Verteilung auf bestimmte Abnehmer sinnvoll sein sollte.

Anstelle einer gleichmäßigen oder in einem bestimmten Verhältnis erfolgenden Aufteilung kann aber auch eine Aufteilung gewünscht sein, die die abzufüllenden Behälter jeweils maximal oder in einem bestimmten Maß füllt, wobei es auf die Zahl der so gefüllten Behälter dann nicht ankommt und der letzte abgefüllte Behälter dann nur eine Teilfüllung erhält.

Dies geschieht durch eine Aufteilung in bestimmten Volumenmengen, also beispielsweise jeweils zehn Liter in die anschließend abzufüllenden Einzelbehälter. Dann ist jeder Behälter mit einer vorab definierten und eingegebenen, ausgewählten oder sonst mitgeteilten Menge beziehungsweise einem entsprechenden Volumen an fließfähigem Gargut beziehungsweise Nahrungsmittel gefüllt. Auch hier kann die Gerätesteuerung vorab aus der ermittelten Volumenangabe des zubereiteten Garguts die Stellungen des Motors bestimmen, die vor und nach der Ausgabe einer Portion in einen der kleineren Behälter angenommen werden sollen. Die Anzahl der so abgefüllten Behälter hängt bei dieser Vorgehensweise von dem zur Verfügung stehenden Volumen ab.

Weitere Variationen und Modifikationen der Erfindung sind in Ausführungsformen möglich, von denen einige in den Unteransprüchen angegeben sind.

So kann die Geschwindigkeit, mit der der Motor den Kippmechanismus antreibt, in Abhängigkeit von der einzugebenden oder auszuwählenden Konsistenz des Garguts gestaltet werden, um ein Überschwappen sehr flüssigen Garguts beim Ansteuern eines Portionierungszwischenschrittes zu vermeiden. Auch dafür werden keine Sensoren oder Messinstrumente benötigt.

Die Geschwindigkeit kann überhaupt im Bereich zwischen dem Ansteuern oder Losfahren von Portionierungsschritten anders und insbesondere schneller gestaltet werden als in diesen Start- und Ansteuerbereichen, ebenfalls zum Vermeiden eines Überschwappens.

Ebenso kann ein automatisches Reversieren nach jedem Ausgieß- und Portioniervorgang vorgesehen werden, um ein ungewünschtes Nachlaufen des Gargutes zu vermeiden.

Es kann die maximale Befüllungsmenge für einen kleineren Behälter geräteseitig auf einen bestimmten Wert begrenzt werden, um Bedienfehler zu vermeiden. Als Begrenzung bieten sich etwa Werte zwischen 15 und 30 Liter an, insbesondere 20 Liter, wie sie in etwa einem genormten Gastronormbehälter (GN-Behälter) entsprechen.

Um Sicherheitsvorschriften zu entsprechen kann geräteseitig vorgesehen werden, dass zwischen zwei Portionen ein zusätzlicher Freigabebefehl des Nutzers und/oder eine Kontaktmitteilung vom Positionierplatz der zu befüllenden Behälter erfolgen muss, um ein Ausgießen etwa heißen Gargutes ohne Unterstellen eines Behälters zu vermeiden.

Eine Anzeigevorrichtung in Form etwa eines Displays kann den Nutzer mit Informationen etwa über das ermittelte Volumen des Garguts unterrichten.

Die Portioniergröße kann auch während des Abfüllens von Schritt zu Schritt geändert werden, um eine völlige Variabilität für den Benutzer zu ermöglichen.

Es kann auch eine Portionierung von nur teilweise fließ- oder schüttfähigen Gütern wie Nahrungsmitteln erfolgen. Dies ermöglicht dem Benutzer eine gleichmäßige und homogenere Abfüllung von Gargütern wie etwa Gulasch mit festen Fleischstücken. Hier kann das Gerät den fließ- oder schüttfähigen Anteil entsprechend portionieren und dem Benutzer zusätzliche Aufforderungen zwischen den einzelnen Schritten vermitteln, etwa die Aufforderung, eine bestimmte Menge des nicht fließ- oder schüttfähigen Anteils des Nahrungsmittels separat auszuschöpfen und dem abzufüllenden kleineren Behälter hinzuzufügen. Hierbei könnte die oben schon angesprochene Wägeeinrichtung mit Nutzen herangezogen werden.

Besonders bevorzugt ist es, wenn eine Abbrechbarkeit der Portionierungsvorgänge vorgesehen ist, welche seitens des Benutzers und/oder Automatisch ein Abbrechen vor, während oder nach einem portionierungsvorgang erlaubt.

Es ist von erheblichen Vorteil, wenn das Gargerät während des Ausgießvorganges eine gut sichtbare und leicht zu bedienende Abbbruchoption zur Verfügung stellt. Hierzu kann beispielsweise eine große Stopp- Fläche in der Bedienungseinrichtung, etwa in einem Touch-Display, vorgesehen werden.

Weiter bevorzugt ist es, wenn während des Ausgießvorganges ein Durchmischen des Gutes erfolgt.

Für die Durchmischung des Gutes während des Ausgießvorganges kann ein Rührwerk vorgesehen werden, dass benachbart zur Überlaufkante eine gleichmäßige Verteilung des im Garraum befindlichen Gutes besorgt.

Weiter ist es von Vorteil, dass nach der Eingabe oder Auswahl des jeweiligen Volumens einzelner Portionen und/oder der Angabe des Typs eines zu füllenden kleineren Behälters die Anzahl der Portionen angezeigt wird, die bei diesen Werten abgefüllt werden.

Bei einem derartigen Verfahren ermittelt die Gerätesteuerung aus den eingegebenen und den als Funktion hinterlegten Daten die Anzahl der Portionen, die bei einer bestimmten Portionsgröße entstehen. Auf einer Anzeigeeinrichtung wird dann der Benutzer über die Anzahl der benötigten Behälter der von ihm ausgewählten Größe informiert und kann diese beispielsweise aus einem Vorratsschrank heranholen und bereitstellen.

Wie schon erwähnt, ist die Zahl der erforderlichen Sensoren erfindungsgemäß drastisch reduziert. Natürlich ist es gleichwohl möglich, Sensoren ergänzend einzusetzen, um weitere vorteilhafte Effekte herbeizuführen.

So kann beispielsweise ein optischer Sensor die Stellung des Garraumes erkennen in dem Moment, wo das im Garraum befindliche fließ- oder schüttfähige Medium genau bis zu der zum Ausgießen vorgesehenen Überlaufkante steht, jedoch der Überlaufvorgang noch nicht begonnen hat.

Ein derart optischer Sensor könnte genutzt werden, um den Vorgang zusätzlich zu automatisieren oder ein weiteres Sicherheitsmerkmal anzubieten.

Weiter können unterschiedliche Sensoren vorgesehen werden, die zum einen die Existenz des zu platzierenden kleineren Behälters feststellen und bei dessen Fehlen verhindern, dass der Ausgießvorgang startet. Dies können optische Sensoren, ebenso aber auch Kontaktsensoren oder Wägesensoren sein.

Zusätzlich können diese Sensoren auch dazu genutzt werden, die Abmessungen dieses kleineren Behälters zu erkennen, um dessen Typ festzulegen. Dass kann genutzt werden, um bei der Eingabe die Festlegung zu erleichtern, wie groß die einzelnen Portionen sein sollen, da sich dies möglicherweise aus dem Typ des unterzustellenden kleineren Behälters ergibt.

Denkbar ist es auch, auch den Füllstand dieses kleineren Behälters mittels eines Wäge- oder optischen Sensors zu überprüfen und den Ausgießvorgang abhängig von diesem Füllstand fortzusetzen oder abzubrechen.

Von besonderem Vorzug ist es, wenn die Gerätesteuerung den Antrieb über den Motor des Kippmechanismus während des Ausgießvorganges für eine Portion so ansteuert, dass der über die zum Ausgießen vorgesehene Überlaufkante strömende Volumenstrom jeweils einen Wert annimmt, der unter Berücksichtigung der vorgegebenen Form der Überlaufkante einen maximalen Wert annimmt, ohne den zum Ausgießen vorgesehenen Bereich der Überlaufkante zu überschreiten.

Die Gerätesteuerung kann in diesem Falle dafür sorgen, dass der Motor seine Drehzahl während des Kippvorganges ändert, und zwar derart, dass der Ausgießvorgang besonders gleichmäßig erfolgt. Dadurch kann von vornherein ein Überschwappen vermieden werden und die Ausgießgeschwindigkeit so hoch gehalten werden, dass eine besonders schnelle Durchführung des Ausgießvorganges möglich wird, ohne Überschwappen oder Nachlaufen. Die Geschwindigkeit kann bevorzugt in Abhängigkeit von der Tiegelgeometrie und dem zum Ausgießen vorgesehenen Bereich der Überlaufkante für zumindest zwei Bereiche empirisch ermittelt werden.

Weiter ist es bevorzugt, wenn die Gerätesteuerung das Volumen beziehungsweise die Portionsgröße einer abgefüllten Portion und/oder den Zeitpunkt des Abfüllens der des Gutes und/oder den Zeitpunkt des Abfüllens der Portion des abgefüllten Gutes und/oder eine Chargennummer und/oder die Anzahl der aus einem zubereiteten Volumen des fließ- oder schüttfähigen Gutes im Garraum insgesamt abgefüllten Portionen protokolliert, speichert und vorzugsweise an einen Drucker, insbesondere einen Etikettendrucker, übermittelt.

Denkbar ist es zum Beispiel, die Steuerung des Gargerätes die Gargutart, das Garprogramm und die dazugehörigen HACCP-Daten protokollieren zu lassen, also etwa die Temperatur, die Garzeit, etc. Zusätzlich werden die Größe der jeweiligen Portion und der Zeitpunkt des Abfüllens aus dem Tiegel in die kleineren Behälter gespeichert, vielleicht zusätzlich auch die Temperatur zum Zeitpunkt des Umfüllens und möglicherweise weitere interessante Daten.

Diese Daten können dann an einen Drucker, beispielsweise einen Etikettendrucker übermittelt werden. Dieser Etikettendrucker druckt dann für jeden Gargutbehälter ein Etikett mit allen relevanten Daten. In der Verarbeitungskette des Gargutes ist somit immer erkennbar, wann die entsprechende Charge zubereitet und abgefüllt wurde. Das jeweilige Etikett ist damit vernetzt und wird automatisch gedruckt, sodass Fehler bei der Ausfüllung eines Etiketts von vornherein vermieden werden können.

Eine weitere bevorzugte Ausführungsform sieht vor, dass vor dem erstmaligen Abfüllvorgang ein Kalibriervorgang durchgeführt wird.

Eine solche Kalibrierung kann auf dem Prüfstand im Werk vorgenommen werden, bevor ein Gargerät erstmals ausgeliefert wird. Natürlich können solche Kalibrierungen auch nach Wartungsarbeiten oder Reparaturen vorgenommen werden.

Dabei kann vorgesehen werden, dass jede Position des kippbaren Garraums in diskreten Schritten angefahren wird, beispielsweise in Schritten in jeweils 5°. Der erreichte Winkel wird dann nachgemessen und gegebenenfalls nachjustiert, sodass eine bestimmte Stellung des Antriebs beziehungsweise des Potentiometers einem exakten Winkel genau zugeordnet werden kann. Dieser präzise angefahrene Winkel wird dann gespeichert. In der Gerätsteuerung wird der in der aktuellen Position gemessene Spannungswert des Potentiometers gespeichert.

Damit kennt die Gerätesteuerung dann für den gesamten Kippbereich des Garraums in Schritten von 5° jeweils die exakte Position und den exakten dazugehörigen Spannungswerts des Potentiometers.

In vereinfachten Ausführungsformen sind nur zwei Referenzpunkte oder nur einige Referenzpunkte vorgesehen, gegebenenfalls zumindest ein Endpunkt für die Kalibrierung.

Weitere bevorzugte Merkmale der Erfindung finden sich in den Unteransprüchen und der Figurenbeschreibung.

Im Folgenden wird anhand der Zeichnung ein Ausführungsbeispiel der Erfindung näher erläutert. Es zeigen:

Figur 1     eine schematische Darstellung einer Ausführungsform der Erfindung;

Figur 2     eine erste mögliche Position eines Tiegels in einer Ausführungsform der Erfindung;

Figur 3     eine zweite mögliche Position eines Tiegels in einer Ausführungsform der Erfindung;

Figur 4     eine dritte mögliche Position eines Tiegels in einer Ausführungsform der Erfindung;

Figur 5     eine vierte mögliche Position eines Tiegels in einer Ausführungsform der Erfindung; und

Figur 6     eine detailliertere Darstellung eines Ausschnittes der Ausführungsform aus Figur 1.

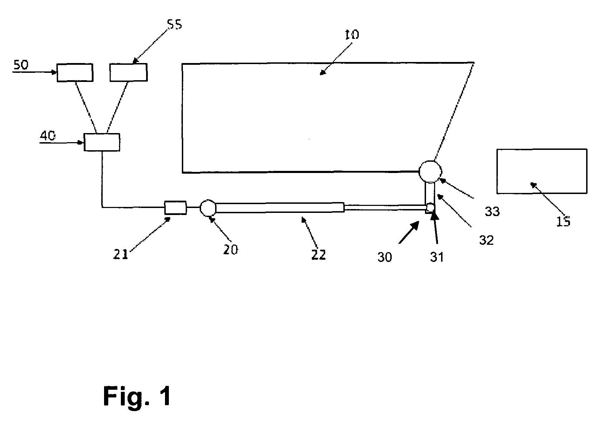

In der **Figur 1** ist schematisch ein Gargerät wiedergegeben, welches einen Garraum 10 in Form eines Tiegels besitzt. In diesem Garraum 10 werden fließ oder schüttfähige Güter, insbesondere Nahrungsmittel zubereitet, beispielsweise Suppen oder auch cremige oder sämige Nahrungsmittel wie etwa Gulasch oder Soßen.

Das betreffende Gargerät ist insbesondere für Großküchen geeignet, in denen gleichzeitig eine Vielzahl von Portionen zubereitet werden, unter Umständen auch Gruppen von Portionen, die anschließend zu anderen Orten im gleichen oder auch einem andere Gebäude befördert werden sollen.

Dies bedeutet, dass die in dem Garraum 10 des Gargerätes zubereiteten Nahrungsmittel nach der Zubereitung aus dem Tiegel in kleinere Behälter 15 abgefüllt werden müssen, wobei diese kleineren Behälter unterschiedlichster Art sein können und üblicherweise transportabel sind.

Es ist also erforderlich, aus dem Gargerät 10 das Gut, also insbesondere die Nahrungsmittel in diese kleineren Behälter 15 umzufüllen, wobei ein Behälter 15 nicht das gesamte Volumen des Nahrungsmittels im Garraum 10 aufnehmen kann.

Um nun das in dem Garraum 10 beziehungsweise Tiegel vorhandene fließ- oder schüttfähige Nahrungsmittel aus dem Garraum 10 in kleinere Behälter 15 abfüllen zu können, wird der Garraum 10 gekippt. Hierfür ist ein Kippmechanismus 30 vorgesehen, der den Garraum 10 um ein Drehgelenk 31 kippt. Das Drehgelenk 31 besitzt eine horizontal und parallel zu einer Überlaufkante des Garraums 10 verlaufende Drehachse. Sie steht senkrecht auf der Blattebene der Figur 1.

Das Drehgelenk 31 greift über einen Hebel 32 am Tiegel mit dem Garraum 10 an. Der Hebel 32 ist über einen festen Verbindungspunkt 33 mit der unteren Kante des Tiegels auf der Seite der Überlaufkante verbunden.

Um den Kippmechanismus 30 in Tätigkeit zu setzen, ist ein Motor 20 vorgesehen. Der Motor 20 treibt über einen Antrieb 22 den Kippmechanismus 30 an und sorgt so für eine gewünschte Kippbewegung des Garraums 10 um das Drehgelenk 31.

Der Antrieb 22 ist ein Linearantrieb. Angedeutet ist ein Kolben 23, relativ zu welchem eine Stange des Antriebs 22 linear herausgeschoben wird. Dieser Linearantrieb 22 setzt den Kippmechanismus 30 in Tätigkeit. Der Linearantrieb 22 greift an dem Drehgelenk 31 an und sorgt so für die Bewegung des Hebels 32 in der oben beschriebenen Form.

An dem Motor 20 ist ein Potentiometer 21 angeschlossen oder in dieses integriert, welches die aktuelle Position des Motors 20 beziehungsweise Stellung des Antriebs 22 abgreift, also feststellt, in welcher Stellung der Antrieb 22 gerade ist und wie er somit den Kippmechanismus 30 für den Garraum 10 betätigt hat.

Der Wert des Potentiometers 21 wird einer Gerätesteuerung 40 zugeführt. Die Gerätesteuerung 40 kann diverse Funktionen ausführen, die im Zusammenhang mit dem Gargerät gewünscht werden. Insbesondere aber steuert sie auch den Motor 20.

Das Potentiometer 21 gibt als Stellung des Antriebes einen Spannungswert aus. Dieser Spannungswert lässt sich mittels eines Polynoms in ein Volumen des fließ- oder schüttfähigen Gargutes im Garraum 10 umrechnen. Versuche haben bereits ergeben, dass hier mit einem Polynom 4. Ordnung sehr gut gearbeitet werden kann. Diese Berechnung ist bei überschaubarer Komplexität ausreichend genau.

Hierzu wird zunächst anhand der Geometrie des Tiegels beziehungsweise Garraums 10 das Volumen in bestimmten Positionen des Garraums 10 berechnet. Diese Zuordnung muss für jede Tiegelgröße beziehungsweise für jede Form und Größe eines Garraums 10 einmalig erfolgen. Bei jedem entsprechenden Gargerät wird durch eine Kalibrierung einmalig ein Offset eingestellt.

Die Polynomregression könnte beispielsweise wie folgt aufgebaut sein:

$$V: A0 + A1*U + A2*U^2 + A3*U^3 \ldots$$

Dabei können beispielsweise folgende Werte in einer Ausführungsform auftreten:

| U_Poti [V] | Volumen [Ltr] |
|---|---|
| 10,4 | 176,2 |
| 8,9 | 157,3 |
| 7,7 | 142,6 |
| 6,7 | 122,0 |
| 5,9 | 100,3 |
| 5,2 | 80,7 |
| 4,6 | 64,2 |
| 4,0 | 50,6 |
| 3,5 | 39,5 |
| 3,1 | 30,3 |
| 2,7 | 22,6 |
| 2,3 | 16,2 |
| 1,9 | 10,9 |
| 1,5 | 6,6 |
| 1,1 | 3,5 |
| 0,8 | 1,9 |
| 0,4 | 0,8 |
| 0,2 | 0 |

Darüber hinaus ist eine Betätigungseinrichtung 50 vorgesehen, auf der ein Benutzer des Gargerätes angibt, welche Aufgaben nunmehr erfüllt werden sollen. Auch diese Daten werden der Gerätesteuerung 40 zugeführt. Über diese Betätigungseinrichtung 50 kann eingegeben werden, wie viele Portionen aus der im Garraum 10 beziehungsweise Tiegel befindlichen Menge an fließfähigem Nahrungsmittel abgefüllt werden sollen. Diese Angabe ist sehr sinnvoll, um sicherzustellen, dass nicht nur in jeden Behälter 15 die gleiche Menge abgefüllt wird, sondern dass auch im letzten abzufüllenden Behälter noch die gleiche Menge Gargut eingefüllt wird und das andererseits kein Gargut im Garraum 10 nach dem Abfüll- und Portioniervorgang verbleibt.

Hier kommt es im Stand der Technik durch Fehlschätzungen häufig zu ungewünschten Abfüllergebnissen.

Weiter ist in der dargestellten Ausführungsform eine Anzeigeeinrichtung 55 vorgesehen, der Werte von der Gerätesteuerung 40 zugeführt werden und auf der dem Benutzer verschiedene Angaben gemacht werden können. Hierzu gehört natürlich die Bestätigung, dass ein bestimmter Auftrag in einer bestimmten Form vom Gargerät so aufgefasst worden ist, um den Benutzer zu zeigen, dass tatsächlich die von ihm gewünschten Vorgänge nun auch durchgeführt werden.

Ebenso kann auf der Anzeigeeinrichtung 55 aber auch angezeigt werden, welche Gesamtvolumenmenge sich nach den Feststellungen der Gerätesteuerung 40 tatsächlich im Garraum 10 des Gargerätes befinden.

Um diese Werte zu ermitteln, kann die Gerätesteuerung 40 beispielsweise auf eine nicht dargestellte Wägeeinrichtung zurückgreifen, die den Unterschied zwischen dem aktuellen Gewicht des Garraumes 10 und dem Leergericht des gleichen Garraumes 10 heranzieht. Die Dichte von fließfähigen Nahrungsmitteln wie Suppen oder Soßen ist stets ungefähr gleich, so dass die konkrete Zusammensetzung bei dieser Bestimmung eine untergeordnete Rolle spielt. Gegebenenfalls kann zur Feinabstimmung aber auch vorgesehen werden, dass über diese Anzeigeeinrichtung auch der Typ des in dem Garraum 10 befindlichen Nahrungsmittels eingegeben oder aus mehreren angebotenen Typen ausgewählt wird.

In der Gerätesteuerung 40 ist bereits ab Werk eine Funktion hinterlegt, die den Zusammenhang zwischen der Stellung des Antriebs 22 einerseits und dem Volumen des Garguts in dem Garraum 10 andererseits enthält. Dieser Zusammenhang ist monoton steigend oder fallend und somit eindeutig, da zu einem bestimmten Wert für eine Stellung des Antriebs 22 nur eine bestimmte Stellung des Garraumes 10 gehören kann und zu dieser Stellung des Garraumes 10 auch feststeht, welches Volumen an fließfähigem Nahrungsmittel sich in ihm befinden.

Dabei ist zu berücksichtigen, dass während des Ausgießvorgangs das fließfähige Nahrungsmitteln exakt bis zur zum Ausgießen vorgesehenen Überlaufkante des Garraumes 10 steht, somit die Oberfläche des Gargutes im Garraum 10 ebenfalls feststeht und sich somit auch das Volumen unterhalb der Oberfläche des Gargutes im Inneren des Garraumes 10 mathematisch eindeutig festlegen lässt, ohne dass es dazu jeweils einer neuen Berechnung bedarf. Dabei kann der Garraum 10 dreidimensional beliebig kompliziert aufgebaut sein, solange sich nicht durch Hinterschneidungen keine eindeutige Funktion mehr für das Volumen in Abhängigkeit von der Stellung des Antriebs 22 ergibt.

Alternativ lässt sich aus dem Gewicht des fließfähigen Nahrungsmittels im Inneren des Garraums 10 für den Zustand vor dem Beginn des Kippens ebenfalls das Volumen des fließfähigen Nahrungsmittels ermitteln, nämlich aus der Dichte des fließfähigen Nahrungsmittels. Damit ist auch eine Bestimmung zu diesem Zeitpunkt vor dem Beginn des Kippens möglich, obwohl die Oberfläche des Gargutes im Garraum 10 zu diesem Zeitpunkt noch nicht an die Längskante des Garraumes 10 anschließt.

Wird also mit zumindest einer dieser beiden Alternativen zu diesem Zeitpunkt seitens des Benutzers über die Betätigungseinrichtung 50 eingegeben, auf wie viele Portionen die in dem Garraum 10 befindliche Volumenmenge des fließfähigen Nahrungsmittels aufgeteilt werden soll, so kann die Gerätesteuerung 40 daraus automatisch anhand der in ihr hinterlegten Funktion ermitteln, welche konkrete Stellung der Garraum 10 jeweils einnehmen muss, damit er im Vergleich zu einer jeweils vorher eingenommenen Stellung genau das Differenzvolumen an einen kleineren Behälter 15 abgibt, welches der ermittelten Portionsgröße entspricht.

Man kann die weitere, von der Gerätesteuerung 40 vorgenommene Funktionsweise den folgenden Figuren entnehmen:

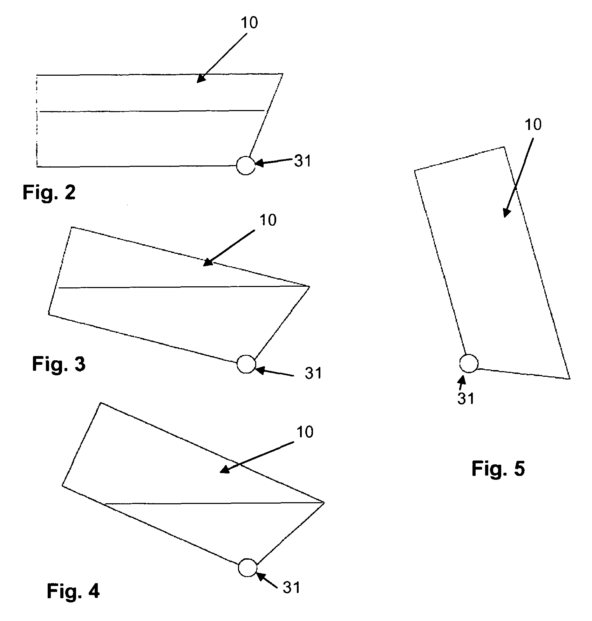

Man sieht zunächst in **Figur 2** nochmals die Stellung aus der Figur 1, jetzt beschränkt allein auf den Garraum 10 beziehungsweise Tiegel. Im Garraum 10 befindet sich ein fließfähiges Nahrungsmittel, welches noch nicht bis zur Kante des Garraums 10 steht beziehungsweise stehen muss. Das Volumen könnte sich einfach durch eine Wiegemessung des Garraumes 10 samt Inhalt automatisch feststellen lassen.

Hat nun der Benutzer über die Bedienungseinrichtung 50 eingegeben, wie viele Portionen aus diesem Volumen abgefüllt werden sollen, so kann die Gerätesteuerung 40 daraus ein Differenzvolumen ermitteln, dass in einem Behälter 15 (in Figur 2 nicht dargestellt) abgegeben werden soll. Ebenso ermittelt sie, welche Stellung des Garraumes 10 es ermöglicht, eine passende Stellung des Garraumes 10 für diese gewünschte Portionierung herauszufinden.

Anstelle des Wiegevorganges besteht auch eine Möglichkeit, gänzlich ohne eine Wiegemessung auszukommen. In diesem Fall wird nach dem Abschluss der Zubereitung des Nahrungsmittels zunächst der Kippvorgang gestartet und beendet in dem Moment, in welchem die Oberfläche des fließfähigen Nahrungsmittels in dem Garraum 10 genau an der Ausgusskante ansteht, noch ohne auszukippen.

Dieser Moment ist in der **Figur 3** angedeutet.

In diesem Moment wird die Gerätesteuerung 40 über diesen Zustand informiert. Aus dem vom Potentiometer 21 des Motors 20 in diesem Moment angezeigten Wert kann die Gerätesteuerung 40 ermitteln, wie groß das Gesamtvolumen des zubereiteten Nahrungsmittels im Inneren des Garraums 10 ist, denn der gesamte theoretisch mögliche Inhalt des Garraums 10 wird ja durch das Nahrungsmittel jetzt eingenommen.

Der beschriebene Vorgang wird jetzt fortgesetzt, wobei dieser Wert des Volumens als Ausgangswert angenommen wird und die weiteren Schritte wie beschrieben durchgeführt werden.

Man sieht in der **Figur 4** nun, dass die in der Figur 1 angedeuteten Elemente wie der Motor 20, der Antrieb 22 und der Kippmechanismus 30 eine noch intensivere Schrägstellung des Garraumes 10 herbeigeführt haben. Dies hat dazu geführt, dass ein Teil des Volumens des fließfähigen Nahrungsmittels aus dem Inneren des Garraumes 10 über die Längskante auf der rechten Seite des Garraumes 10 in den in Figur 1 zu erkennenden darunter gestellten Behälter 15 abgefüllt worden ist.

Der Behälter 15 wird nun gewechselt, entweder automatisch oder durch einen Benutzer. Nach diesem Vorgang wird dann durch erneute Freigabe seitens des Benutzers auf der Bedienungseinrichtung 50 oder auch durch einen Automatismus eine weitere, in der Gerätesteuerung 40 automatisch ermittelte Stellung des Antriebs 22 angefahren, die zu einer Stellung des Garraumes 10 wie in der Figur 4 gezeigt führt.

Man sieht in der **Figur 5**, dass der Garraum 10 nun eine noch weiter verstärkte Schrägstellung einnimmt und dass zwischen der Position in der Figur 4 und der Position in der Figur 5 das Volumen im Inneren des Garraumes 10 eine Differenz aufweist. Diese Differenz ist nun wiederum in einen (anderen) Behälter 15 abgeflossen.

Das noch im Garraum 10 befindliche Volumen, das ebenfalls die gleiche Größe besitzt wie das Differenzvolumen zwischen den Figuren 3 und 4, ist nun durch eine erneute Kippbewegung des Garraumes 10 um das Drehgelenk 31 in einen erneut anderen Behälter 15 ausgegeben worden.

Dadurch ist nun der Garraum 10 vollständig entleert und kann beispielsweise einer Reinigung unterzogen werden.

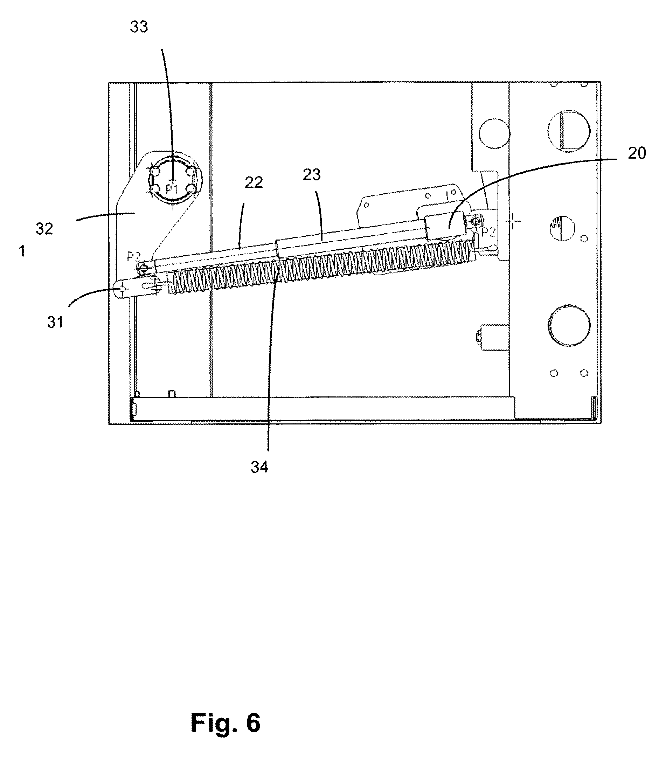

In der **Figur 6** ist die Konstruktion ähnlich der Figur 1 in etwas größerem Maßstab dargestellt und zeigt einige zusätzliche Einzelheiten.

Die dargestellte Ausgangsposition zeigt einen Tiegel mit einem Garraum 10 mit waagerechtem Boden. So sieht man hier den Motor 20 auf der rechten Seite, der in dem Linearantrieb 22 seiner Hubstange einen Zylinder aus dem Kolben 23 herausschiebt. Genau betrachtet zieht sich der Linearantrieb zusammen und fährt somit die Stange in den Kolben.

Am anderen Ende des Antriebs 22 sieht man das Drehgelenk 31 beziehungsweise den Drehpunkt, an dem eine Verbindung mit dem Hebel 32 vorgesehen ist, welcher seinerseits über die feste Verbindung 33 mit dem Garraum 10 verbunden ist. Dadurch, dass der Linearantrieb den Hebel 32 zu sich heranzieht, wird der mit dem Hebel 32 am Verbindungspunkt 33 fest verbundene Tiegel mit dem Garraum 10 gedreht beziehungsweise gekippt.

Zusätzlich zu erkennen ist eine Rückzugfeder 34, die ein Rückziehen der Zylinders des Antriebs 22 in den Kolben 23 sicherstellt.

In den Figuren zur Verdeutlichung nicht weiter dargestellt ist ein weiteres Detail. So wird der Tiegel mit dem Garraum 10 für die Arbeitsposition zunächst so angeordnet, dass der Boden des Garraums 10 beispielsweise beim Braten waagerecht steht. Bekommt der Motor mit dem Antrieb beim Zurückfahren aus einer gekippten Stellung in diese waagerechte Stellung des Bodens den Stopp-Befehl, wenn die Wunschposition erreicht ist, so läuft er minimal nach. Bei einer direkten Kopplung würde er mithin über die waagerechte Position noch hinauslaufen, was natürlich nicht gewünscht wird. Dies wird durch Unterstützungspunkte vermieden, auf denen der Tiegel in dieser Situation aufliegt.

Ein Vorteil dieser Bauform ist die erreichbare präzise waagerechte Stellung des Bodens des Garraums. Darüber hinaus ist auch eine freiere Montage möglich, da der Tiegel mit dem Garraum nicht ausschließlich an dem Drehgelenk hängt, welches für den Kippvorgang zuständig ist.

Gerade im Zusammenhang mit diesen Unterstützungspunkten beim Aufliegen des Tiegels in der Arbeitsposition ist eine Kalibrierung dieser sogenannten Ankippposition sinnvoll, also der Position, die den Moment des Abhebens des Tiegels von diesen Unterstützungspunkten beschreibt.

Bei einer derartigen Kalibrierung kann berücksichtigt werden, dass die Position mit dem genau waagerechten Boden des Garraums 10 der wirklichen Startposition und dem "echten" 0°-Winkel entspricht. Der Motor mit dem Antrieb startet vorher. Das Potentiometer 21 übermittelt bereits einen Zwischenwert. Der in Ankipppostion kalibrierte Spannungswert des Potentiometers 21 entspricht dann dem Off-Set und ist für jedes Gargerät einmalig einzustellen.

**Bezugszeichenliste**

| | |
|---|---|
| 10 | Garraum |
| 15 | Behälter |
| | |
| 20 | Motor |
| 21 | Potentiometer |
| 22 | Antrieb, insbesondere Linearantrieb |
| 23 | Kolben |
| | |
| 30 | Kippmechanismus |
| 31 | Drehgelenk |
| 32 | Hebel |
| 33 | Verbindungspunkt |
| 34 | Rückzugfeder |
| | |
| 40 | Gerätesteuerung |
| | |
| 50 | Betätigungseinrichtung |
| 55 | Anzeigeeinrichtung |

**Patentansprüche**

1. Verfahren zum Abfüllen von fließ- oder schüttfähigem Gut aus einem Garraum (10) eines Gargeräts mit einem Motor (20) und mit einem von dem Motor (20) über einen Antrieb (22) angetriebenen Kippmechanismus (30),
mit folgenden Schritten:

zu Beginn wird der Garraum (10) in eine Stellung gekippt, in der das fließ-oder schüttfähige Gut im Garraum (10) bis zu einer zum Ausgießen vorgesehenen Überlaufkante steht, über diese jedoch noch nicht hinwegläuft,

dabei wird die Stellung des Antriebs (22) in diesem Moment festgestellt,

aus dieser Stellung des Antriebs (22) wird mittels einer vorab ermittelten Funktion das Volumen des Gutes im Garraum (10) festgestellt,

dieses festgestellte Volumen des Guts im Garraum (10) wird auf der Grundlage von Eingaben in einer Bedienungseinrichtung (55) sofort oder sukzessive in mehrere gleich und/oder verschieden große Teilvolumen für Portionen umgerechnet,

für diese Teilvolumen werden Stellungen des Antriebs (22) für sukzessive Ausgießvorgänge festgelegt, und

der Motor (20) treibt über den Antrieb (22) den Kippmechanismus (30) in mehreren Schritten so an, dass dieser die gleich großen und/oder unterschiedlich großen Portionen sukzessive über die Überlaufkante des Garraums (10) ausgießt.

2. Verfahren nach Anspruch 1,
   **dadurch gekennzeichnet,**
   **dass** der Motor (20) mittels eines Linearantriebs als Antrieb (22) auf den Kippmechanismus (30) einwirkt, und
   **dass** die Stellung des Antriebs (22) durch die Stellung des Linearantriebes gebildet und durch ein Potentiometer (21) als Spannungswert angegeben wird.

3. Verfahren nach Anspruch 1 oder 2,
   **dadurch gekennzeichnet,**
   **dass** das Volumen einzelner Portionen durch direkte Angabe des jeweiligen Volumens und/oder die Angabe eines Typs eines zu füllenden kleineren Behälters (15) und/oder durch die Angabe der Anzahl der Portionen bestimmt wird.

4. Verfahren nach Anspruch 1, 2 oder 3,
   **dadurch gekennzeichnet,**
   **dass** ein Typ des fließ- oder schüttfähigen Gutes und/oder seine Konsistenz aus dem Garprogramm abgeleitet und/oder ausgewählt und/oder eingegeben wird.

5. Verfahren nach einem der vorstehenden Ansprüche,
   **dadurch gekennzeichnet,**
   **dass** das Volumen einer einzelnen Portion des Gutes begrenzt wird, insbesondere auf einen Wert im Bereich von 15 bis 30 Litern, insbesondere von 20 Litern.

6. Verfahren nach einem der vorstehenden Ansprüche,
   **dadurch gekennzeichnet,**
   **dass** mittels einer Wägeeinrichtung der Garraum (10) mit dem in ihm enthaltenen Gut gewogen wird, und
   **dass** aus diesem Gewicht unter Berücksichtigung des bekannten Gewichts des Garraums (10) ohne Gut und der gegebenenfalls aus einer eingegebenen Konsistenz oder des Typs des Guts ermittelten Dichte des Guts das Volumen des Guts errechnet und zur Prüfung und/oder Modifikation des aus der Stellung des Antriebs (22) ermittelten Wertes des Volumens herangezogen wird.

7. Verfahren nach einem der vorstehenden Ansprüche,
   **dadurch gekennzeichnet,**
   **dass** das Teilvolumen bei den dem ersten Portionierungsvorgang folgenden Portionierungsvorgängen voreingestellt wird, und
   **dass** das Teilvolumen jeweils vor dem Ausgießvorgang des Teilvolumens einer Portion neu einstellbar ist.

8. Verfahren nach einem der vorstehenden Ansprüche,
   **dadurch gekennzeichnet,**
   **dass** der Garraum (10) nach jedem Ausgießvorgang reversiert und so ein Nachlaufen vermeidet.

9. Verfahren nach einem der vorstehenden Ansprüche,
   **dadurch gekennzeichnet,**
   **dass** bei teilweise fließ- oder schüttfähigem Gut eine Portionierung des fließ-oder schüttfähigen Anteils nach einem der vorstehenden Ansprüche erfolgt, und
   **dass** eine Information über manuell zu überführende nicht fließ- oder schüttfähige Anteile ausgegeben wird.

10. Verfahren nach einem der vorstehenden Ansprüche,
    **dadurch gekennzeichnet,**
    **dass** eine Abbrechbarkeit der Portionierungsvorgänge vorgesehen ist, welche seitens des Benutzers und/oder automatisch ein Abbrechen vor, während oder nach einem Portionierungsvorgang erlaubt.

11. Verfahren nach einem der vorstehenden Ansprüche,
    **dadurch gekennzeichnet,**
    **dass** während des Ausgießvorganges ein Durchmischen des Gutes erfolgt.

12. Verfahren nach einem der vorstehenden Ansprüche,
    **dadurch gekennzeichnet,**
    **dass** nach der Eingabe oder Auswahl des jeweiligen Volumens einzelner Portionen und/oder der Angabe des Typs eines zu füllenden kleineren Behälters (15) die Anzahl der Portionen angezeigt wird, die bei diesen Werten abgefüllt werden.

**13.** Verfahren nach einem der vorstehenden Ansprüche, **dadurch gekennzeichnet, dass** die Gerätesteuerung (40) den Antrieb (22) über den Motor (20) des Kippmechanismus (30) während des Ausgießvorganges für eine Portion so ansteuert, dass der über die zum Ausgießen vorgesehene Überlaufkante strömende Volumenstrom jeweils einen Wert annimmt, der unter Berücksichtigung der vorgegebenen Form der Überlaufkante einen maximalen Wert annimmt, ohne den zum Ausgießen vorgesehenen Bereich der Überlaufkante zu überschreiten.

**14.** Verfahren nach einem der vorstehenden Ansprüche, **dadurch gekennzeichnet, dass** die Gerätesteuerung (40) das Volumen beziehungsweise die Portionsgröße einer abgefüllten Portion des fließ- oder schüttfähigen Gutes und/oder den Zeitpunkt des Abfüllens der Portion des abgefüllten Gutes und/oder eine Chargennummer und/oder die Anzahl der aus einem zubereiteten Volumen des fließ- oder schüttfähigen Gutes im Garraum (10) insgesamt abgefüllten Portionen protokolliert, speichert und vorzugsweise an einen Drucker, insbesondere einen Etikettendrucker, übermittelt.

**15.** Verfahren nach Anspruch 14, **dadurch gekennzeichnet, dass** zusätzlich die Temperatur des Garguts zum Zeitpunkt des Abfüllens der Portion protokolliert, gespeichert und bevorzugt dem Drucker, insbesondere dem Etikettendrucker, übermittelt wird, bevorzugt mit weiteren Daten betreffend das Gargut, das Garprogramm und für das Gargut relevante Größen.

**16.** Verfahren nach Anspruch 14 oder 15, **dadurch gekennzeichnet, dass** die von dem Etikettendrucker gedruckten Etiketten mit den relevanten Daten einer jeden Charge einschließlich der Chargennummer auf den zugehörigen, mit der Portion des abgefüllten Garguts gefüllten Behälter befestigt werden.

**17.** Verfahren nach einem der vorstehenden Ansprüche, **dadurch gekennzeichnet, dass** vor dem erstmaligen Abfüllvorgang ein Kalibriervorgang durchgeführt wird.

**18.** Verfahren nach Anspruch 17, **dadurch gekennzeichnet, dass** der Kalibriervorgang wie folgt durchgeführt wird:

mit dem Motor (20) und dem Antrieb (22) werden diskrete Schritte des Kippvorgangs nacheinander angefahren, der sich aus der Stellung des Antriebs (22) jeweils errechnende Winkel des mit dem Kippmechanismus (30) gekippten Garraums (10) wird nachgemessen und gegebenenfalls nachjustiert, und der präzise angefahrene und nachjustierte Winkel wird gespeichert und in der Gerätesteuerung (40) der zugehörige Spannungswert zugehörig gespeichert.

**19.** Verfahren nach Anspruch 18, **dadurch gekennzeichnet, dass** Zwischenpositionen zwischen den diskreten Winkelpositionen berechnet und gespeichert werden.

**20.** Gargerät, mit einem mit fließ- oder schüttfähigem Gut füllbaren Garraum (10), mit einem Motor (20), mit einem von dem Motor (20) mittels eines Antriebs (22) angetriebenen Kippmechanismus (30) zum Kippen des Garraums (10) aus einer Arbeitsposition in mindestens eine weitere Position und zurück, mit einer Gerätesteuerung (40), mit einer Bedienungseinrichtung (50), die mit der Gerätesteuerung (40) verbunden ist, **dadurch gekennzeichnet, dass** der Motor (20) und/oder der Antrieb (22) über ein Potentiometer (21) verfügt, welches mit der Gerätesteuerung (40) verbunden ist, und welches abhängig von einer Stellung des Antriebs (22) einen Spannungswert an die Gerätesteuerung (40) liefert, **dass** in der Gerätesteuerung (40) eine Funktion hinterlegt ist, welche den Spannungswert des Potentiometers (21) in Relation zu einem Volumen des fließ- oder schüttfähigen Guts im Garraum (10) setzt, und **dass** die Gerätesteuerung (40) so ausgebildet ist, dass abhängig von Eingaben in die Bedienungseinrichtung (50) ein mittels des Potentiometers (21) festgestelltes Volumen des Gutes im Garraum (10) durch Ansteuern des Motors (20) und Antreiben des Kippmechanismus (30) über den Antrieb (22) in gleich großen und/oder unterschiedlich großen Portionen sukzessive ausgießbar ist.

**21.** Gargerät nach Anspruch 20, **dadurch gekennzeichnet, dass** die Bedienungseinrichtung (50) und die Gerätesteuerung (40) so ausgebildet und aufeinander abgestimmt sind, dass das Volumen einzelner Portionen durch direkte Angabe des jeweiligen Volumens und/oder die Angabe eines Typs eines zu füllenden kleineren Behälters (15) und/oder durch die Angabe der Anzahl der Portionen bestimmbar ist.

**22.** Gargerät nach Anspruch 20 oder 21, **dadurch gekennzeichnet, dass** die Bedienungseinrichtung (50) und die Gerätesteuerung (40) so ausgebildet und aufeinander abgestimmt sind, dass eine Eingabe des Typs des fließ- oder schüttfähigen Guts und/oder seiner Konsistenz auswählbar und/oder eingebbar und/oder aus dem Garprogramm ableitbar ist.

23. Gargerät nach einem der Ansprüche 20 bis 22, **dadurch gekennzeichnet,** **dass** das Volumen einer einzelnen Portion begrenzbar ist, insbesondere auf einen Wert im Bereich von 15 bis 30 Litern, insbesondere von 20 Litern.

24. Gargerät nach einem der Ansprüche 20 bis 23, **dadurch gekennzeichnet,** **dass** eine Wägeeinrichtung für den Garraum (10) vorgesehen ist, und dass die Wägeeinrichtung mit der Gerätesteuerung (40) verbunden ist.

25. Gargerät nach einem der Ansprüche 20 bis 24, **dadurch gekennzeichnet,** **dass** der Antrieb (22) ein Linearantrieb ist.

**Claims**

1. A method for filling a flowable or pourable product from a cooking chamber (10) of a cooking device with a motor (20) and with a tilting mechanism (30) driven by the motor (20) via a drive (22), with the following steps:

   at the start, the cooking chamber (10) is tilted into a position, in which the flowable or pourable product stands in the cooking chamber (10) up to a pouring edge provided for pouring, but does not yet flow over the latter,
   in this context, the position of the drive (22) at this moment is determined;
   the volume of product in the cooking chamber (10) is determined from this position of the drive (22) by means of a previously established function;
   on the basis of entries in an operating device (55), this determined volume of the product in the cooking chamber (10) is converted immediately or successively into several part volumes for portions of identical and/or different size;
   positions of the drive (22) for these part volumes are determined for successive pouring processes;
   and the motor (20) drives the tilting mechanism (30) via the drive (22) in several steps, in such a manner that the latter pours the portions of identical size and/or of different size successively over the pouring edge of the cooking chamber (10).

2. The method according to claim 1, **characterised in that**

the motor (20) acts, by means of a linear drive, as a drive (22) on the tilting mechanism (30), and that the position of the drive (22) is formed by the position of the linear drive and specified by a potentiometer (21) as a voltage value.

3. The method according to claim 1 or 2, **characterised in that** the volume of individual portions is determined by direct specification of the respective volume and/or specification of a type of a relatively smaller container (15) to be filled and/or by specifying the number of portions.

4. The method according to claim 1, 2 or 3, **characterised in that** a type of the flowable or pourable product and/or its consistency is derived and/or selected and/or entered from the cooking program.

5. The method according to any one of the preceding claims, **characterised in that** the volume of an individual portion of the product is limited, especially to a value in the range from 15 to 30 litres, especially 20 litres.

6. The method according to any one of the preceding claims, **characterised in that** the cooking chamber (10) with the product contained in it is weighed by means of a weighing device, and that the volume of the product is calculated from this weight, taking into consideration the known weight of the cooking chamber (10) without the product and the density of the product, optionally determined from an entered consistency or from the type of the product, and used for testing and/or modifying the value of the volume determined from the position of the drive (22).

7. The method according to any one of the preceding claims, **characterised in that** the part volume in the positioning processes following the first positioning process is pre-adjusted, and that the part volume can be readjusted respectively before the pouring process of the part volume for a portion.

8. The method according to any one of the preceding claims, **characterised in that** the cooking chamber (10) is reversed after each pouring process, thereby avoiding a backflow.

9. The method according to any one of the preceding claims,

**characterised in that**,
in the case of a partially flowable or pourable product, a portioning of the flowable or pourable part is implemented according to any one of the preceding claims, and
that information is output regarding non-flowable or non-pourable parts to be transferred manually.

10. The method according to any one of the preceding claims,
**characterised in that**
a possibility for interrupting the portioning processes which allows an interruption either by the user and/or automatically, during or after a portioning process, is provided.

11. The method according to any one of the preceding claims,
**characterised in that**
a mixing of the product is implemented during the pouring process.

12. The method according to any one of the preceding claims,
**characterised in that**,
after the entry or selection of the respective volume of individual portions and/or the specification of the type of a relatively smaller container (15) to be filled, the number of portions which are to be filled with these values is displayed.

13. The method according to any one of the preceding claims,
**characterised in that**
the device control (40) controls the drive (22) via the motor (20) of the tilting mechanism (30) during the pouring process for one portion, in such a manner that the volume-flow flowing over the pouring edge provided for pouring adopts a value in each case which adopts a maximum value taking into consideration the specified shape of the pouring edge, without going beyond the region of the pouring edge provided for pouring.

14. The method according to any one of the preceding claims,
**characterised in that**
the device control (40) logs, buffers and preferably communicates to the printer, especially a label printer, the volume or the portion size of a filled portion of the flowable or pourable product and/or the time of filling the portion of the filled product and/or a batch number and/or the total number of portions filled from a volume of the flowable or pourable product provided in the cooking chamber (10).

15. The method according to claim 14,
**characterised in that**

the temperature of the cooking product at the time of filling of the portion is additionally logged, buffered and preferably communicated to the printer, especially the label printer, preferably with further data relating to the cooking product, the cooking program and parameters relevant for the cooking product.

16. The method according to claim 14 or 15,
**characterised in that**
the labels printed by the label printer with the relevant data for every batch including the batch number are attached to the associated filled containers filled with the portion of the cooking product.

17. The method according to any one of the preceding claims,
**characterised in that**
a calibration process is implemented before the first filling process.

18. The method according to claim 17,
**characterised in that**
the calibration process is implemented as follows:

discrete steps of the tilting process are approached successively with the motor (20) and the drive (22), the angle of the cooking chamber (10) tilted with the tilting mechanism (30) to be calculated respectively from the position of the drive (22) is re-measured and optionally adjusted, and
the angle precisely approached and adjusted is buffered, and the associated voltage value is buffered in an associated manner in the device control (40).

19. The method according to claim 18,
**characterised in that**
intermediate positions between the discrete angular positions are calculated and buffered.

20. A cooking device,
with a cooking chamber (10) capable of being filled with flowable or pourable product, with a motor (20), with a tilting mechanism (30) driven by the motor (20) by means of a drive (22) for tilting the cooking chamber (10) from an operating position into at least one further position and back,
with a device control (40),
with an operating device (50), which is connected to the device control (40),
**characterised in that**
the motor (20) and/or the drive (22) comprises a potentiometer (21), which is connected to the device control (40) and which supplies a voltage value to the device control (40) dependent upon a position of the drive (22),
that a function is stored in the device control (40) which matches the voltage value of the potentiometer (21) with a volume of the flowable or pourable product in the cooking chamber (10), and
that the device control (40) is embodied in such a manner that, dependent upon entries in the operating device (15), a volume of the product in the cooking chamber (10) determined by means of the potentiometer (21) can be poured out successively in portions of identical size and/or different size by controlling the motor (20) and driving the tilting mechanism (30) via the drive (22).

21. The cooking device according to claim 20,
**characterised in that**
the operating device (15) and the device control (40) are embodied and matched with one another in such a manner that the volume of individual portions can be determined by direct specification of the respective volume and/or specification of a type of a relatively smaller container (15) to be filled and/or by specifying the number of portions.

22. The cooking device according to claim 20 or 21,
**characterised in that**
the operating device (50) and the device control (40) are embodied and matched with one another in such a manner that an entry of the type of flowable or pourable product and/or its consistency can be selected and/or entered and/or derived from the cooking program.

23. The cooking device according to any one of claims 20 to 22,
**characterised in that**
the volume of a single portion can be limited, especially to a value within the range from 15 to 30 litres, especially 20 litres.

24. The cooking device according to any one of claims 20 to 23,
**characterised in that**
a weighing device is provided for the cooking chamber (10), and that the weighing device is connected to the device control (40).

25. The cooking device according to any one of claims 20 to 24,
**characterised in that**
the drive (22) is a linear drive.

**Revendications**

1. Procédé de remplissage de produit fluide ou pouvant être déversé d'un espace de cuisson (10) d'un appareil de cuisson avec un moteur (20) et avec un mécanisme de basculement (30), entraîné par le moteur (20) par l'intermédiaire d'un entraînement (22),
comprenant les étapes suivantes :

au début, l'espace de cuisson (10) est basculé dans une position, dans laquelle le produit fluide ou pouvant être déversé se situe dans l'espace de cuisson (10) jusqu'à une arête de trop-plein prévue pour le déversement, mais ne coule pas encore par-dessus cette dernière,
la position de l'entraînement (22) est alors déterminée à ce moment,
à partir de cette position de l'entraînement (22), le volume du produit dans l'espace de cuisson (10) est déterminé au moyen d'une fonction préalablement établie,
ce volume déterminé du produit dans l'espace de cuisson (10) est converti immédiatement ou successivement, sur la base d'entrées de données dans un dispositif de commande (55), en plusieurs volumes partiels de grandeurs égales et/ou différentes pour des portions,
des positions de l'entraînement (22) pour des opérations de déversement successives sont déterminées pour ces volumes partiels, et
le moteur (20) entraîne par l'intermédiaire de l'entraînement (22) le mécanisme de basculement (30) en plusieurs étapes, de sorte que ce dernier déverse successivement, par-dessus l'arête de trop-plein de l'espace de cuisson (10), les portions de grandeurs égales et/ou différentes.

2. Procédé selon la revendication 1,
**caractérisé en ce que**
le moteur (20) agît sur le mécanisme de basculement (30) au moyen d'un entraînement linéaire en tant qu'entraînement (22), et
que la position de l'entraînement (22) est formée par la position de l'entraînement linéaire et indiquée par un potentiomètre (21) en tant que valeur de tension.

3. Procédé selon l'une des revendications 1 et 2, **caractérisé en ce que**
le volume de portions individuelles est déterminé par indication directe du volume respectif et/ou par l'indication d'un type d'un récipient plus petit (15) à remplir et/ou par l'indication du nombre de portions.

4. Procédé selon l'une des revendications 1, 2 et 3,
**caractérisé en ce que**
un type du produit fluide ou pouvant être déversé et/ou sa consistance sont déduits et/ou sélectionnés et/ou introduits à partir du programme de cuisson.

5. Procédé selon l'une revendications précédentes,
**caractérisé en ce que**
le volume d'une portion individuelle du produit est limité, en particulier à une valeur comprise dans une plage de 15 à 30 litres, en particulier de 20 litres.

**6.** Procédé selon l'une des revendications précédentes,
**caractérisé en ce que**
au **moyen** d'un dispositif de pesage l'espace de cuisson (10), avec le produit contenu dans ce dernier, est pesé, et
que, à partir de ce poids et compte tenu du poids connu de l'espace de cuisson (10) sans produit et de la masse volumique du produit, éventuellement déterminée à partir d'une consistance introduite ou du type de produit, le volume du produit est calculé et utilisé pour vérifier et/ou modifier la valeur déterminée du volume à partir de la position de l'entraînement (22).

**7.** Procédé selon l'une des revendications précédentes,
**caractérisé en ce que**
le volume partiel est préréglé lors des opérations de mise en portions consécutives à la première opération de mise en portions, et
que le volume partiel est de nouveau réglable avant chaque opération de déversement du volume partiel d'une portion.

**8.** Procédé selon l'une des revendications précédentes,
**caractérisé en ce que**
l'espace de cuisson (10) est inversé après chaque opération de déversement et évite ainsi un postécoulement.

**9.** Procédé selon l'une revendications précédentes,
**caractérisé en ce que**,
en présence d'un produit en partie fluide ou pouvant être déversé, une mise en portions de la part fluide ou pouvant être déversée s'effectue selon l'une des revendications précédentes, et
qu'une information est émise sur des parts à transférer non fluides ou inaptes au déversement.

**10.** Procédé selon l'une des revendications précédentes,
**caractérisé en ce que**
il est prévu une possibilité d'interruption des opérations de mises en portions, qui permet de la part de l'utilisateur et/ou automatiquement une interruption avant, pendant ou après une opération de mise en portions.

**11.** Procédé selon l'une des revendications précédentes,
**caractérisé en ce que**,
un mélange du produit s'effectue pendant l'opération de déversement.

**12.** Procédé selon l'une des revendications précédentes,
**caractérisé en ce que**,
après l'introduction ou le choix du volume respectif de portions individuelles et/ou l'indication du type d'un récipient (15) plus petit à remplir, le nombre des portions, remplies pour ces valeurs, est affiché.

**13.** Procédé selon l'une des revendications précédentes,
**caractérisé en ce que**
la commande d'appareil (40) contrôle l'entraînement (22) par l'intermédiaire du moteur (20) du mécanisme de basculement (30) pendant l'opération de déversement pour une portion de sorte que le débit volumique, s'écoulant par-dessus l'arête de tropplein prévue pour le déversement, prend à chaque fois une valeur qui atteint une valeur maximale, compte tenu de la forme prédéfinie de l'arête de tropplein, sans dépasser par le haut la zone, prévue pour le déversement, de l'arête de trop-plein.

**14.** Procédé selon l'une des revendications précédentes,
**caractérisé en ce que**
la commande d'appareil (40) consigne, mémorise et transmet de préférence à une imprimante, en particulier une imprimante pour étiquettes, le volume et/ou la grandeur d'une portion remplie du produit fluide ou pouvant être déversé et/ou l'instant du remplissage de la portion du produit rempli et/ou un numéro de lot et/ou le nombre des portions remplies au total dans l'espace de cuisson (10) à partir d'un volume préparé du produit fluide ou pouvant être déversé.

**15.** Procédé selon la revendication 14,
**caractérisé en ce que**
la température du produit de cuisson à l'instant du remplissage de la portion est en supplément consignée, mémorisée et transmise de préférence à l'imprimante, en particulier l'imprimante pour étiquettes, de préférence avec d'autres données afférentes au produit de cuisson, au programme de cuisson et pour des grandeurs importantes pour le produit de cuisson.

**16.** Procédé selon l'une des revendications 14 et 15,
**caractérisé en ce que**
les étiquettes imprimées par l'imprimante, avec les données importantes de chaque lot, y compris le numéro de lot, sont fixées sur les récipients correspondants, remplis de la portion du produit de cuisson.

**17.** Procédé selon l'une des revendications précédentes,
**caractérisé en ce que**
une opération d'étalonnage est réalisée avant la première opération de remplissage.

**18.** Procédé selon la revendication 17,
**caractérisé en ce que**
l'opération d'étalonnage est réalisée comme suit des étapes discrètes de l'opération de basculement sont démarrées successivement par le moteur (20) et l'entraînement (22),
l'angle, respectivement calculé à partir de la position de l'entraînement (22), de l'espace de cuisson (10) basculé par le mécanisme (30), est remesuré et éventuellement rajusté, et l'angle de démarrage précis et rajusté est mémorisé et la valeur de tension correspondante est mémorisée dans l'appareil de commande (40).

**19.** Procédé selon la revendication 18,
**caractérisé en ce que**
des positions intermédiaires entre les positions angulaires discrètes sont calculées et mémorisées.

**20.** Appareil de cuisson comprenant
un espace de cuisson (10) qui peut être rempli d'un produit fluide ou pouvant être déversé,
un moteur (20),
un mécanisme de basculement (30), entraîné par le moteur (20) au moyen d'un entraînement (22), pour le basculement de l'espace de cuisson (10) à partir d'une position de travail dans au moins une autre position et en retour,
un appareil de commande (40),
un dispositif de commande (50), relié à la commande d'appareil (40),
**caractérisé en ce que**
le moteur (20) et/ou l'entraînement (22) disposent d'un potentiomètre (21) relié à l'appareil de commande (40) et qui fournit, indépendamment d'une position de l'entraînement (22), une valeur de tension à la commande d'appareil (40),
qu'une fonction est consignée dans la commande d'appareil (40), laquelle fonction met en relation la valeur de tension du potentiomètre (21) avec un volume du produit fluide ou pouvant être déversé dans l'espace de cuisson (10), et
que la commande d'appareil (40) est réalisée de sorte que, en fonction de données d'entrée dans le dispositif de commande (50), un volume du produit dans l'espace de cuisson (10), déterminé au moyen du potentiomètre (21), peut être déversé successivement par commande du moteur (20) et entraînement du mécanisme de basculement (30), par l'intermédiaire de l'entraînement (22), en portions de grandeurs égales et/ou différentes.

**21.** Appareil de cuisson selon la revendication 20,
**caractérisé en ce que**
le dispositif de commande (50) et la commande d'appareil (40) sont réalisés et mutuellement adaptés de sorte que le volume de portions individuelles est déterminable par indication directe du volume respectif et/ou l'indication d'un type de récipient (15) plus petit à remplir et/ou par l'indication du nombre des portions.

**22.** Appareil de cuisson selon l'une des revendications 20 et 21,
**caractérisé en ce que**
le dispositif de commande (50) et la commande d'appareil (40) sont réalisés et mutuellement adaptés de sorte qu'une introduction du type du produit fluide ou pouvant être déversé et/ou de sa consistance peut être sélectionnée et/ou introduite et/ou inférée du programme de cuisson.

**23.** Appareil de cuisson selon l'une des revendications 20 à 22,
**caractérisé en ce que**
le volume d'une portion individuelle est délimitable, en particulier à une valeur dans la plage de 15 à 30 litres, en particulier de 20 litres.

**24.** Appareil de cuisson selon l'une des revendications 20 à 23,
**caractérisé en ce que**
il est prévu un dispositif de pesage pour l'espace de cuisson (10), et
que le dispositif de pesage est relié à la commande d'appareil (40).

**25.** Appareil de cuisson selon l'une des revendications 20 à 24,
**caractérisé en ce que**
l'entraînement (22) est un entraînement linéaire.

# Fig. 1

10

31

**Fig. 2**

10

31

**Fig. 3**

10

31

**Fig. 5**

10

31

**Fig. 4**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3411564 A1
- DE 9309709 U1
- EP 0208854 B1
- EP 1806993 B1
- EP 2301392 A1